# EUROPÄISCHE PATENTSCHRIFT

(11) **EP 2 670 665 B1**
(45) Veröffentlichungstag und Bekanntmachung des Hinweises auf die Patenterteilung: **21.09.2016**
(21) Anmeldenummer: 12715810.3
(22) Anmeldetag: 23.01.2012
(51) Int. Cl.: B64F 1/00, B64F 1/36

(54) **ANORDNUNG ZUR BESCHLEUNIGUNG EINES ZERFALLS VON WIRBELSCHLEPPEN IM KURZEN ENDTEIL EINES ANFLUGS AUF EINE LANDEBAHN UMFASSEND DIE LANDEBAHN UND EINE ERDBODENOBERFLÄCHE MIT EINER OBERFLÄCHENSTRUKTUR**
ARRANGEMENT FOR ACCELERATING DECAY OF WAKE TURBULENCE IN THE SHORT FINAL OF AN APPROACH TO A RUNWAY COMRISING THE RUNWAY AND A GROUND SURFACE WITH A SURFACE STRUCTURE
ARRANGEMENT DESTINÉ À ACCÉLÉRER LA DISPARITION DE TRAÎNÉES TOURBILLONNAIRES DANS L'EXTRÉMITÉ COURTE D'UNE DISTANCE D'APPROCHE SUR UNE PISTE D'ATTERRISSAGE COMPORTANT LA PISTE D'ATTERRISSAGE ET UNE SURFACE AU SOL AVEC UNE STRUCTURE DE SURFACE

(30) Priorität: 02.02.2011 DE 102011010147
(43) Veröffentlichungstag der Anmeldung: 11.12.2013
(73) Patentinhaber: Deutsches Zentrum für Luft- und Raumfahrt e.V., 51147 Köln (DE)
(72) Erfinder: HOLZÄPFEL, Frank, 86919 Utting (DE)
(74) Vertreter: Rasch, Michael
(86) Internationale Anmeldenummer: PCT/DE2012/000051
(87) Internationale Veröffentlichungsnummer: WO 2012/103864

(56) Entgegenhaltungen:
- WO-A2-2010/049394
- CA-C- 2 103 762
- DE-A1- 3 544 904
- DE-A1-102005 025 004
- US-A- 3 693 015

## Beschreibung

Die Erfindung betrifft eine Anordnung umfassend eine Landebahn mit einem zugehörigen Landebahnanfang und einer Landebahnlängsachse, sowie einer Erdbodenoberfläche mit einer Oberflächenstruktur, wobei sich die Erdbodenoberfläche mit der Oberflächenstruktur im kurzen Endteil eines Anfluges auf die Landebahn befindet, und wobei die Anordnung der Beschleunigung eines Zerfalls von Wirbelschleppen, die von einem anfliegenden Flugzeug produziert werden, dient. Der Begriff "kurzer Endteil" gibt den letzten Teil des Anfluges auf eine Landebahn an. Wesentlich ist hierbei vorliegend, dass ein anfliegendes Flugzeug sich in diesem Teil des Anfluges stetig dem Boden bis zur Landung nähert, und dabei so geringe Flughöhen über Grund erreicht, dass die vom Flugzeug erzeugte Wirbelschleppe mit der Erdoberfläche interagieren kann.

Der weltweite Luftverkehr wächst seit Jahren kontinuierlich mit etwa fünf Prozent pro Jahr. Bis zum Jahr 2025 wird sich der Passagier-Flugverkehr laut aktueller Prognosen verdoppeln. Immer mehr Flughäfen stoßen dadurch an ihre Kapazitätsgrenzen. Bekanntermaßen wird die Zahl der Flugbewegungen auf einer Lande- bzw. Startbahn pro Zeit aufgrund von vorgegebenen Sicherheitsabständen zwischen anfliegenden bzw. zwischen abfliegenden Flugzeugen limitiert. Diese Sicherheitsabstände müssen eingehalten werden, weil sich infolge des bei fliegenden Flugzeugen an den Tragflächen erzeugten Auftriebs zwei starke gegensinnig rotierende Wirbel ausbilden, die für nachfolgende Flugzeuge gefährlich sein können. Diese zwei Wirbel im Nachlauf von Flugzeugen werden auch als "Wirbelschleppe" (engl. "Wake Turbulence") bezeichnet, deren Wirbelintensitäten insbesondere bei Start und Landung, aufgrund der in dieser Flugphase niedrigen Fluggeschwindigkeit und der vorhandenen Flugzeugkonfiguration (ausgefahrene Landeklappen) besonders groß ist.

Fliegt ein Flugzeug in diese räumlich begrenzte Wirbelschleppe eines vorausfliegenden Flugzeuges ein, so können außerordentlich große zusätzliche aerodynamische Kräfte und Momente auf das Flugzeug einwirken, die vom in die Wirbelschleppe einfliegenden Flugzeug im schlimmsten Fall nicht ausgeglichen werden können und zu unkontrollierten Fluglagen oder zur strukturellen Überlastung des Flugzeugs führen können. Um die Gefahr derartiger gefährlicher Vorfälle weitestgehend auszuschließen, sind im Bereich der kontrollierten Verkehrsluftfahrt bereits seit vielen Jahren minimale Längsstaffelungen zwischen zwei aufeinander folgenden Flugzeugen vorgeschrieben.

Diese Vorschriften orientieren sich derzeit am zulässigen Maximalgewicht (MTOW = "Maximum Take Off Weight") der beteiligten Flugzeuge und berücksichtigen keinerlei andere, die Wirbelentwicklung und -abschwächung beeinflussenden Effekte. Diese Sicherheitsabstände limitieren damit die maximal möglichen Start- und Landefrequenzen auf Flughäfen und führen bei hohem Verkehrsaufkommen zu Kapazitätsengpässen und damit zu Warteschleifen und Verspätungen.

Da die notwendigerweise einzuhaltenden Staffelungen die knappen Kapazitäten von Luftraum und Verkehrsflugplätzen einschränken, wird der Entstehung und dem Einfluss von Wirbelschleppen auf nachfolgende Flugzeuge seit einigen Jahren besondere Aufmerksamkeit gewidmet. Ziel vielfältiger Forschungen in Europa und den USA ist, die Phänomene der Wirbelerzeugung und des Wirbelschleppeneinflusses soweit zu erforschen, dass letztlich die aus Sicherheitsgründen vorzuhaltenden Längsstaffelungen flexibler gehandhabt und insbesondere verringert werden können. Die Forschung zu diesem Thema lässt sich derzeit in drei Bereiche aufteilen: Wirbelvermeidung, Wirbelverträglichkeit und Wirbelerkennung bzw. Wirbelvorhersage.

Die Wirbelvermeidung basiert darauf, Flugzeuge mit günstiger Wirbelcharakteristik zu entwickeln, so dass die Wirbelerzeugung, bspw. durch konstruktive Modifikationen am Flugzeug selbst, bereits in der Entstehung verringert wird. So ist bekannt, dass Flugzeugwirbelschleppen durch die Erzeugung und Interaktion von Mehr-Wirbel-Systemen abgeschwächt werden können. Konstruktive Möglichkeiten zur Erzeugung solcher Mehr-Wirbel-Systeme durch das Flugzeug selbst sind bspw. aus den Druckschriften DE 199 09 190 A1 oder US 6,082,679 A bekannt. Die Verbesserung der Wirbelverträglichkeit von Flugzeugen beschäftigt sich hingegen mit Möglichkeiten, Flugzeuge derart zu gestalten, dass die Flugsicherheit eines Flugzeugs trotz Einflug in eine Wirbelschleppe gewährleistet bleibt, d.h. dass die strukturelle Auslegung des Flugzeugs derart ist, dass es einen Einflug in bzw. Durchflug durch Wirbelschleppen schadlos übersteht, und dass die Steuerungsauslegung entsprechende Kompensationsmanöver bei Einflug in bzw. Durchflug durch Wirbelschleppen ermöglicht. Die Wirbelvorhersage und die Wirbelerkennung basiert auf der Erforschung der physikalischen Prozesse zur Bildung, zum Transport und zum Zerfall der Wirbel in der Erdatmosphäre. Diese physikalischen Prozesse sind heute weitestgehend bekannt. Daraus abgeleitete Methoden zur Abschätzung des Wirbelverhaltens in Abhängigkeit aktueller meteorologischer Kennwerte lassen heute eine hinreichend gute Wirbelvorhersage zu. Seit einigen Jahren werden nun auf Basis von aktuellen Wirbel-Messungen bzw. Kenntnissen zur Wirbelphysik Wirbelschleppenwarnsysteme entwickelt, die es erlauben sollen, unter geeigneten atmosphärischen Bedingungen die Abstände zwischen landenden bzw. zwischen startenden Flugzeugen dynamisch anzupassen. Das heißt, dass es mittels dieser Wirbelschleppenwarnsysteme möglich sein soll, unter Beachtung der Sicherheitsanforderungen und abhängig von aktuellen atmosphärischen Messgrößen die Flugzeugstaffelung dynamisch zu verkürzen bzw. zu vergrößern.

Aus der US 3 693 015 A geht ein System zur Erfassung von Wirbelschleppen im Nahbereich einer Landebahn hervor. Das System umfasst eine Mehrzahl von Lasern und Laserdetektoren, die an gegenüberliegenden Seiten der Landebahn angeordnet sind und die die Turbulenzintensität von Wirbelschleppen erfassen.

Aus der DE 10 2005 025 004 A1 gehen ein Verfahren und eine Vorrichtung zum Abmindern der Zirkulation von Hauptwirbeln in Wirbelschleppen hinter Flugzeugen hervor. Hierbei wird an dem von den Flugzeugen überflogenen Ende der Landebahn in zwei einander über eine Bahnmittelebene der Landebahn gegenüberliegenden und von dieser Bahnmittelebene beabstandeten Bereichen Luft in den Boden eingesaugt und in zwei anderen, näher an der Bahnmittelebene liegenden Bereichen wieder aus dem Boden ausgeblasen.

Aus der WO 2010/049394 A2 gehen ein Verfahren und eine Vorrichtung zum abmildern der Zirkulation in der Wirbelschleppe hinter einem startenden oder landenden Flugzeug hervor. Dabei werden auf beiden Seiten des Flugzeugs unter einem Winkel zum Boden orientierte Ringwirbel am Boden erzeugt, die die Schleppenwirbel stören, um deren Zerfall zu induzieren.

Es ist bekannt, dass in großen Flughöhen, in denen die Wirbelschleppe eines Flugzeugs nicht durch den Erdboden beeinflusst wird, die Flugzeuglängsstaffelung in einem Flugkorridor dann verringert werden kann, wenn zumindest eines der folgenden Kriterien sichergestellt ist:
- die Wirbel sinken unter den Flugkorridor ab,
- die Wirbel werden seitlich aus dem Flugkorridor verdriftet,
- aufgrund der aktuellen Umgebungsturbulenz bzw. Temperaturschichtung zerfallen die Wirbel schnell und werden daher ausreichend schnell geschwächt, oder
- vorhergesagte Wirbelgebiete werden durch alternative/geänderte Flugrouten vermieden.

Das Vorliegen der vorstehenden Kriterien kann mit hinreichender Genauigkeit durch entsprechende atmosphärische Messungen ermittelt werden, so dass eine dynamische Flugzeugstaffelung in großen Flughöhen grundsätzlich möglich scheint. Anders sieht es jedoch in geringen Flughöhen aus, weil in geringen Flughöhen Effekte des Erdbodens auf eine Wirbelschleppe nicht unberücksichtigt bleiben können, und die Anwendung der vorstehend beschriebenen Kriterien nicht ohne weiteres möglich ist.

So ist bekannt, dass die meisten Einflüge von Flugzeugen in Wirbelschleppen bei Start und Landung in den untersten 100 m über Grund erfolgen, da die Wirbelschleppen dort nicht, wie in großen Flughöhen, unter den An- bzw. Abflugkorridor absinken, sondern im Gegenteil durch die Interaktion mit dem Erdboden auch wieder aufsteigen können. Schwache Querwinde werden in Bodennähe durch den selbstinduzierten Lateraltransport des Luv Wirbels kompensiert, so dass die Wirbel den Anflug- bzw. Abflugkorridor erst bei sehr starken Querwinden verlässlich verlassen. Auch der Beitrag atmosphärischer Turbulenz und Temperaturschichtung zum Wirbelzerfall in Bodennähe ist nur sehr schwach ausgeprägt. Zudem ist ein Einflug in derartige Wirbel in geringen Flughöhen erheblich gefährlicher als in großen Flughöhen, da in einer geringen Flughöhe der verfügbare Luftraum für kompensierende Flugmanöver aufgrund der Bodennähe stark begrenzt ist. Zudem ist die Wirbelintensität aufgrund der geringen Fluggeschwindigkeit, des hohen Anstellwinkels der Flugzeugtragflügel und der ausgefahrenen Landeklappen während des Endanfluges am größten, so dass die erforderlichen, zur Kompensation der Auswirkungen von Wirbelschleppen auf ein Flugzeug erforderlichen Flugmanöver einen größeren Luftraum beanspruchen, als in großen Flughöhen. Kommt es hier zu unkontrollierten Fluglagen, können diese in Extremfällen im verfügbaren Luftraum nicht kompensiert werden, sodass die Folge eine Bodenberührung bzw. ein Absturz ist.

Nachteilig ist demzufolge, dass eine dynamische Flugzeugstaffelung in niedriger Flughöhe auf Basis der vorstehend für große Flughöhen angegebenen Kriterien häufig nicht möglich ist. Dies begrenzt die maximal mögliche Kapazität von Flugbewegungen auf einer Lande- bzw. Startbahn in einschneidender Weise.

Aufgabe der Erfindung ist es, die durch Wirbelschleppen begrenzte Kapazität von Flugbewegungen auf einer Lande- bzw. Startbahn zu erhöhen.

Die Erfindung ergibt sich aus den Merkmalen des unabhängigen Anspruchs.

Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Die Aufgabe ist gemäß Anspruch 1 mit einer Anordnung zur Beschleunigung des Zerfalls von Wirbelschleppen eines Flugzeugs im Landeanflug, umfassend eine Landebahn mit einem zugehörigen Landebahnanfang und einer Landebahnlängsachse, sowie einer Erdbodenoberfläche mit einer Oberflächenstruktur, die derart ausgeführt ist, dass durch Interaktion der Oberflächenstruktur mit Primärwirbeln einer Wirbelschleppe eines anfliegenden Flugzeugs Sekundärwirbel erzeugt werden, die mit den Primärwirbeln derart interagieren, dass die Primärwirbel beschleunigt zerfallen, wobei die Erdbodenoberfläche mit der Oberflächenstruktur unmittelbar vor dem Landebahnanfang angeordnet ist, die die Oberflächenstruktur aufweisende Erdbodenoberfläche folgendes Längen- und Breitenmaß aufweist: Längenmaß im Bereich von 0.5 - 2.5 km; Breitenmaß im Bereich von 25 - 1000 m, die Oberflächenstruktur aus Wandelementen gebildet wird, die Wandelemente beidseitig der Landebahnlängsachse jeweils in zumindest einer zur Landebahnlängsachse parallelen Reihe angeordnet sind, die Längsachsen der Wandelemente parallel zur Landebahnlängsachse ausgerichtet sind, die Erhebungshöhe (h) der einzelnen Wandelemente im Bereich von 1 m - 10 m, insbesondere 1 m - 5 m beträgt, wobei die einzelnen Wandelemente einen Abstand (a) voneinander haben, der im Bereich von 1 - 600 m liegt.

Die Erfindung basiert auf der Idee, durch die Oberflächenstruktur der Erdbodenoberfläche im kurzen Endteil eines Anfluges auf eine Landebahn, den Zerfall der von einem Flugzeug erzeugten Wirbelschleppe (Primärwirbel) in Bodennähe zuverlässig zu beschleunigen, und somit die vorstehend aufgeführten nachteiligen Bodeneffekte auf die Wirbel weitestgehend zu verhindern. Es wird hiermit erstmals vorgeschlagen, den Zerfall von Wirbelschleppen in Bodennähe durch passive Maßnahmen am Boden zu beschleunigen. Dabei entsteht bei der Annäherung der Wirbelschleppe eines anfliegenden oder startenden Flugzeugs an die erfindungsgemäß modifizierte Erdbodenoberfläche an der Oberflächenstruktur eine Scherschicht, aus der sich Sekundärwirbel ablösen. Diese Sekundärwirbel interagieren mit den Primärwirbeln der Wirbelschleppe derart, dass der Zerfall der Primärwirbel beschleunigt wird. Durch die erfindungsgemäße Oberflächenstruktur wird die Erzeugung der Sekundärwirbel in Flugrichtung moduliert. Dadurch wickeln sich die Sekundärwirbel um die Primärwirbel und erzeugen so Instabilitäten, die die Primärwirbel deformieren und zum beschleunigten Zerfall der Wirbelschleppe führen. Bereits die Deformation der Primärwirbel vermindert ihre Wirkung auf einfliegende Flugzeuge, da dadurch die Einwirkzeit widriger Kräfte und Momente verringert wird.

Insgesamt kann durch die erfindungsgemäße Anordnung der Zerfall der Primärwirbel durch modulierte Sekundärwirbel induziert und beschleunigt werden. Die Sicherheit regulärer Landungen und Starts und die Kapazität von Flugbewegungen auf einer Start- und Landebahn werden dadurch erhöht.

Die erfindungsgemäße Oberflächenstruktur wirkt dabei in passiver Weise auf absinkende bodennahe Wirbelschleppen, die während Landung oder Start von Flugzeugen erzeugt werden, die Herstellung der erfindungsgemäßen Oberflächenstruktur ist preiswert und der Aufwand für deren Erhalt ist gering. Die wirbelauflösende Wirkung der erfindungsgemäßen Oberflächenstruktur ist weitestgehend unabhängig von den jeweiligen Umgebungsbedingungen.

Die erfindungsgemäßen Erhebungen können statistisch oder deterministisch, insbesondere in periodischen Mustern angeordnet sein, sodass gezielt Instabilitäten der Wirbelschleppen in unterschiedlichen Skalen, wie bspw. die kurzweilige Instabilität, die langweilige Instabilität, die Crow-Instabilität, sowie Instabilitäten von Vierwirbelsystemen angeregt werden. Gleiches gilt auch für die Verteilung der Erhebungshöhen. Auch diese können statistisch variieren oder deterministisch, insbesondere periodisch variieren. Es wird dabei davon ausgegangen, dass die betroffene Erdbodenoberfläche vor der Herstellung der erfindungsgemäßen Oberflächenstruktur weitestgehend eben ist, und somit eine nahezu einheitliche Geländehöhe bspw. in m NN, aufweist. Die Erhebungshöhe gibt dabei die Vertikalausdehnung der jeweiligen Erhebung über der Geländehöhe an.

Um modulierte Sekundärwirbel bzw. Instabilitäten der Wirbelschleppen in den vorgenannten unterschiedlichen Skalen anzuregen, sind die Erhebungen erfindungsgemäß im Bereich von 1 - 600 m, vorzugsweise 1 - 400 m, 1 - 200 m, 1 - 100 m, 1 - 50 m,
1 - 25 m, 1 - 15 m, 1 - 10 m, oder insbesondere 2 - 8 m voneinander beabstandet anzuordnen. Weiterhin sollen die Erhebungshöhen dabei erfindungsgemäß im Bereich von 1 m - 10 m, insbesondere von 1 - 5 m gewählt werden.

Da die von Flugzeugen erzeugten Wirbelcharakteristika bekanntermaßen von Flugzeugmasse und Flügelspannweite abhängen, sind sowohl die zur Erzeugung besagter Instabilitäten erforderlichen Abstände der Erhebungen als auch deren Erhebungshöhen je nach Flugzeugtyp unterschiedlich. Für eine Lande- und Startbahn, die von unterschiedlichen Flugzeugtypen benutzt wird, kann bspw. eine Optimierung der Anordnung der Erhebungen sowie von deren Erhebungshöhen für eine Auswahl von Flugzeugtypen erfolgen. Bevorzugt sind dies die größten anfliegenden Flugzeuge, da von diesen für die nachfolgenden kleineren Flugzeuge die größte Gefahr ausgeht. Es ist selbstverständlich, dass die Erhebungen, was deren Lage und Erhebungshöhe angeht, derart ausgeführt werden, dass die behördlichen Forderungen und Auflagen hinsichtlich der Hindernisfreiheit im Anflug- und Abflugbereich stets gewährleistet sind. Die Erhebungen können als flexible Wände ausgebildet sein. Besonders bevorzugt sind hierbei weiche flexible Baumaterialien, wie bspw. Schaumstoff, Styropor, etc., die einem Flugzeug im Falle einer Bodenberührung möglichst nur einen sehr geringen Widerstand entgegensetzen, so dass im Falle einer Bodenberührung eines Flugzeugs im wesentlichen keine zusätzlichen Unfallquellen durch die Erhebungen erzeugt werden.

Eine bevorzugte Weiterbildung der erfindungsgemäßen Anordnung zeichnet sich dadurch aus, dass die die Oberflächenstruktur aufweisende Erdbodenoberfläche folgendes Längen- und Breitenmaß aufweist: Längenmaß im Bereich von 1.5 - 2.2 km, insbesondere 1.8 - 2.0 km; Breitenmaß im Bereich von 50 - 250 m, 75 - 125 m, wobei die Erdbodenoberfläche bevorzugt eine Rechteckfläche ist. Das Längenmaß der betroffenen Erdbodenoberfläche im Endanflug hängt vom kleinsten Anflugwinkel eines für die Landebahn vorgesehenen Anflugverfahrens ab. Je flacher dieser Anflugwinkel ist, desto größer ist das erforderliche Längenmaß. Das Breitenmaß hängt insbesondere vom Gewicht und der Spannweite der größten anfliegenden Flugzeuge ab. Ist nur eine Landebahn vorhanden (keine Parallelbahnen), wird ein Anflugwinkel von 3° unterstellt, und werden Flugzeuge wie bspw. Airbus A380 oder Boeing 747 berücksichtigt, so kann eine erfindungsgemäß strukturierte Erdbodenoberfläche mit einem Längenmaß von: 1 NM (= 1,852 km) und einem Breitenmaß von: ± 50 bis ± 75 m bezogen auf die Landebahnlängsachse einen hinreichend schnellen Zerfall von Wirbelschleppen bewirken, sodass die Längsstaffelung der anfliegenden Flugzeuge gegenüber heute merklich reduziert werden kann.

Die Längsachse der Erdbodenoberfläche ist in bevorzugter Weise mit der Landebahnlängsachse identisch. Die Erdbodenoberfläche ist in Anflugrichtung unmittelbar vor der Landebahnschwelle angeordnet. Im Falle von eng benachbart angeordneten, parallelen Lande- bzw. Startbahnen, die nicht unabhängig betrieben werden können, empfiehlt es sich, auch die Erdbodenoberfläche zwischen den Lande- bzw. Startbahnen im Bereich ihres jeweiligen Endteils mit der erfindungsgemäßen Oberflächenstruktur auszustatten. So können bei Querwind verdriftete Wirbelschleppen aufgelöst oder zumindest signifikant abgeschwächt werden, bevor sie den Anflugbereich der entsprechenden Parallelbahn erreichen.

Erfindungsgemäß sind die Erhebungen mit ihrer Längsachse parallel zur Landbahnlängsachse angeordnet, da in diesem Fall die aerodynamisch wirksame Fläche der Erhebungen auch der größten Frontalfläche entspricht und so die größte Wirkung erzielt wird.

Erfindungsgemäß sind die Erhebungen beidseitig der Landebahnlängsachse jeweils in zumindest einer zur Landebahnlängsachse parallelen Reihe angeordnet. Zur Anregung der Instabilitäten variieren die Erhebungshöhen der Erhebungen vorteilhaft entlang der Landbahnlängsrichtung in deterministischer Weise gemäß einer vorgegebenen Funktion, insbesondere sinusförmig. Natürlich sind andere Variationen ebenfalls denkbar. Im Falle der sinusförmigen Variation liegen die Wellenlängen der sinusförmigen Variationen der Erhebungshöhen bevorzugt im Bereich von 1 - 600 m, insbesondere im Bereich von 300 - 500 m. Insbesondere beträgt die Wellenlänge 400 m ± 15 m, wobei die Erhebungshöhe bis zu einer maximalen Erhebungshöhe von 5 m variiert.

Weitere Vorteile, Merkmale und Einzelheiten ergeben sich aus der nachfolgenden Beschreibung, in der unter Bezug auf die Zeichnungen ein Ausführungsbeispiel im Einzelnen beschrieben ist.

Gleiche, ähnliche und/oder funktionsgleiche Teile sind mit gleichen Bezugszeichen versehen.

Es zeigen:
- Fig. 1: eine schematisierte Darstellung einer erfindungsgemäßen Anordnung; und
- Fig. 2: einen Vertikalschnitt entlang der Schnittlinie A-A' aus Fig. 1.

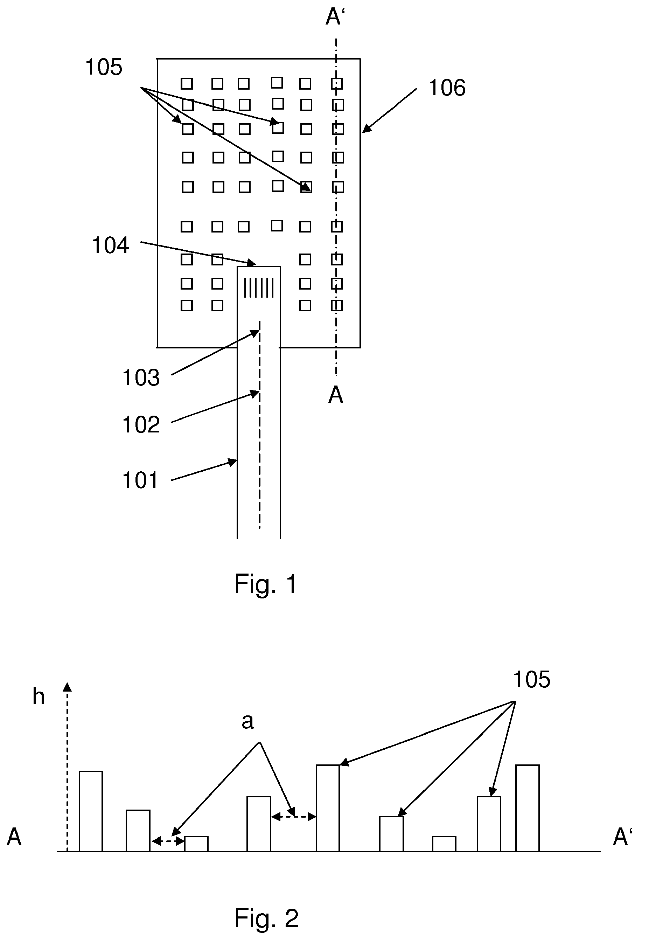

Fig. 1 zeigt eine schematisierte Darstellung einer Landebahn 101 mit einer den Landebahnanfang 104 (Landebahnkopf) umgebenden Erdoberfläche 106, die eine erfindungsgemäße Oberflächenstruktur aufweist. Die Landebahn 101 mit dem Landbahnanfang 104, der Landebahnlängsachse 102 hat eine Aufsetzzone 103, die den Bereich angibt, in dem Flugzeuge auf der Landebahn 101 mit ihren Rädern bei der Landung typischerweise aufsetzen. Der Anflug auf die schematisch dargestellte Landebahn 101 erfolgt vorliegend längs der Landebahnlängsachse vom oberen Bildrand in Richtung auf die Aufsetzzone 103. Dabei endet der kurze Endteil des Anfluges am Landbahnbeginn 104.

Bekanntermaßen erzeugen die Tragflächen eines fliegenden Flugzeugs an den Flügelenden die Randwirbel (primäre Wirbel der Wirbelschleppe). Erst nach der Landung, d.h. wenn alle Räder des Fahrwerks aufgesetzt haben, ist die Wirbelproduktion stark reduziert bzw. nahezu nicht mehr vorhanden. Aus diesem Grund ist es vorteilhaft, die erfindungsgemäß strukturierte Erdbodenoberfläche längs der Landebahn 106 soweit zu erstrecken, dass die Aufsetzzone 103 der Landebahn 101 seitlich von der erfindungsgemäß strukturierten Oberfläche umgeben ist. Somit erfolgt ein beschleunigter Zerfall der vom Flugzeug erzeugten Wirbelschleppe bis zum Landepunkt.

Die Erdoberfläche 106 weist in dem gezeigten Ausführungsbeispiel eine erfindungsgemäße Oberflächenstruktur mit einer Vielzahl von vereinzelten Erhebungen 105 mit einer Erhebungshöhe h im Bereich von 1 - 5 m auf, wobei die einzelnen Erhebungen einen Abstand von 2 - 8 m voneinander haben. Die in Fig. 1 dargestellten Größenverhältnisse sind jedoch nicht maßstabsgerecht.

Vorliegend sind die Erhebungen 105 in Reihen parallel zur Landebahnlängsachse 102 angeordnet. Weiterhin sind die Erhebungen 105 hinsichtlich ihrer Anordnung und ihrer Erhebungshöhe h derart ausgeführt, dass alle behördlichen Anforderungen, insbesondere die Anforderungen an die Hindernisfreiräume im Anflugsektor, erfüllt sind.

Die Erhebungen 105 sind zwar vorliegend als Quadrate dargestellt, was aber nicht auf ihre äußere Formgebung schließen lässt. Vielmehr sind die Erhebungen 105 in als Wandelemente ausgeführt, deren Längsachsen parallel zur Landebahnlängsachse 102 ausgerichtet sind. Die Erhebungen 105 sind desweiteren bevorzugt aus Schaumstoff oder Styropor gefertigt.

Weiterhin kann der Fig. 1 eine Schnittlinie A-A' entnommen werden, entlang der ein Vertikalschnitt in Fig. 2 dargestellt ist.

Fig. 2 zeigt den nicht maßstäblichen Vertikalschnitt entlang der Schnittlinie A-A' aus Fig. 1. Die Schnittlinie A-A' repräsentiert die Erdbodenoberfläche, die im vorliegenden Ausführungsbeispiel im gesamten Erdoberflächenbereich 106 eben ist, d.h. ein Höhenniveau hat. Die Erhebungen 105 verleihen der Erdbodenoberfläche 106 eine erfindungsgemäße Oberflächenstruktur. Zu erkennen ist, dass die einzelnen Erhebungen 105 unterschiedliche Erhebungshöhen h aufweisen, die vorliegend annähernd sinusförmig entlang der Landebahnlängsrichtung 102 variieren. Dabei sind vorliegend die Abstände a der einzelnen Erhebungen 105 nicht konstant, sondern variieren ebenfalls. Die Abstände a sowie die Erhebungshöhen h werden abhängig von den auf diese Landebahn 101 anfliegenden größten Flugzeuge gewählt.

Um beispielsweise die Crow-Instabilität anzuregen, die typischerweise die Wellenlänge von 6 - 7, insbesondere 6,8 mal der Spannweite eines Flugzeugs hat, ergibt sich für eine Boeing 747 mit einer Spannweite von 64,4 Metern eine optimale Wellenlänge von 438 Metern.

## Patentansprüche

1. Anordnung zur Beschleunigung des Zerfalls von Wirbelschleppen eines Flugzeugs im Landeanflug, umfassend eine Landebahn (101) mit einem zugehörigen Landebahnanfang (104) und einer Landebahnlängsachse (102), sowie einer Erdbodenoberfläche (106) mit einer Oberflächenstruktur, die derart ausgeführt ist, dass durch Interaktion der Oberflächenstruktur mit Primärwirbeln einer Wirbelschleppe eines anfliegenden Flugzeugs Sekundärwirbel erzeugt werden, die mit den Primärwirbeln derart interagieren, dass die Primärwirbel beschleunigt zerfallen, wobei
- die Erdbodenoberfläche (106) mit der Oberflächenstruktur unmittelbar vor dem Landebahnanfang (104) angeordnet ist,
- die die Oberflächenstruktur aufweisende Erdbodenoberfläche (106) folgendes Längen- und Breitenmaß aufweist: Längenmaß im Bereich von 0.5 - 2.5 km; Breitenmaß im Bereich von 25 - 1000 m,
- die Oberflächenstruktur aus Wandelementen (105) gebildet wird,
- die Wandelemente (105) beidseitig der Landebahnlängsachse (102) jeweils in zumindest einer zur Landebahnlängsachse (102) parallelen Reihe angeordnet sind,
- die Längsachsen der Wandelemente (105) parallel zur Landebahnlängsachse ausgerichtet sind,
- die Erhebungshöhe (h) der einzelnen Wandelemente (105) im Bereich von 1 m - 10 m, insbesondere 1 m - 5 m beträgt, wobei die einzelnen Wandelemente (105) einen Abstand (a) voneinander haben, der im Bereich von 1 - 600 m liegt.

2. Anordnung gemäß Anspruch 1,
**dadurch gekennzeichnet, dass** die Erdbodenoberfläche (106) eine Rechteckfläche ist.

3. Anordnung gemäß einem der Ansprüche 1 bis 2,
**dadurch gekennzeichnet, dass** die Erhebungen (105) hinsichtlich ihrer Anordnung, Erhebungshöhe (h) und/oder ihres Abstandes (a) variieren.

4. Anordnung gemäß einem der Ansprüche 1 bis 3,
**dadurch gekennzeichnet, dass** die Erhebungshöhen (h) der Erhebungen (105) entlang der Landbahnlängsrichtung sinusförmig variieren.

5. Anordnung gemäß Anspruch 4,
**dadurch gekennzeichnet, dass** Wellenlänge der sinusförmigen Variationen der Erhebungshöhen (h) im Bereich von 1 - 600 m, insbesondere 300 - 500 m liegt.

6. Anordnung gemäß Anspruch 4 oder 5,
**dadurch gekennzeichnet, dass** die Wellenlänge 400 m ± 15 m beträgt, wobei die Erhebungshöhe (h) bis zu einer maximalen Erhebungshöhe (h) von 5 m variiert.

## Claims

1. Arrangement for accelerating the decay of wake turbulence produced by an aircraft in a landing approach, comprising a runway (101) with an associated start (104) of the runway and with a runway longitudinal axis (102), and a ground surface (106) with a surface structure, which is embodied in such a way that, due to interaction of the surface structure with primary turbulence of a wake vortex of an incoming aircraft, a secondary turbulence is formed, which interacts with the primary turbulence in such a way that the primary turbulence decays at an accelerated rate, wherein
- the ground surface (106) with the surface structure is arranged directly in front of the start of the runway (104),
- the ground surface (106) having the surface structure has the following length and width measurements: length measurement in the range from 0.5 - 2.5km; width measurement in the range from 25 - 1000m,
- the surface structure is formed of wall elements (105),
- the wall elements (105) are arranged on both sides of the longitudinal axis of the runway (102), each in at least one row parallel to the longitudinal axis of the runway (102),
- the longitudinal axes of the wall elements (105) are oriented parallel to the longitudinal axis of the runway,
- the elevation height (h) of the individual wall elements (105) is in the range from 1m - 10m, in particular 1m - 5m, wherein the individual wall elements (105) are spaced apart from one another by a distance (a), which is in the range from 1 - 600m.

2. Arrangement according to Claim 1,
**characterized in that**
the ground surface (106) is a rectangular flat surface.

3. Arrangement according to any one of Claims 1 to 2,
**characterized in that**
the elevations (105) vary with respect to their arrangement, elevation height (h) and/or their spacing (a) .

4. Arrangement according to any one of Claims 1 to 3,
**characterized in that**
the elevation heights (h) of the elevations (105) vary sinusoidally along the longitudinal direction of the runway.

5. Arrangement according to Claim 4,
**characterized in that**
the wavelength of the sinusoidal variations of the elevation heights (h) is in the range from 1 - 600m, in particular 300 - 500m.

6. Arrangement according to Claim 4 or 5,
**characterized in that**
the wavelength has a value of 400m ± 15m, wherein the elevation height (h) varies up to a maximum elevation height (h) of 5m.

## Revendications

1. Agencement destiné à accélérer la désintégration de turbulences de sillage d'un avion à l'approche de l'atterrissage, comprenant une piste d'atterrissage (101) avec un début (104) de piste d'atterrissage associé et un axe longitudinal (102) de piste d'atterrissage, ainsi qu'une surface (106) de sol avec une structure superficielle qui est réalisée de sorte que par l'interaction de la structure superficielle avec des tourbillons primaires d'une turbulence de sillage d'un avion à l'approche, des tourbillons secondaires soit générés qui interagissent avec les tourbillons primaires de telle sorte que les tourbillons primaires se désintègrent de manière accélérée,
- la surface (106) de sol avec la structure superficielle étant placée immédiatement avant le début (104) de la piste d'atterrissage
- la surface (106) de sol comportant la structure superficielle présentant la dimension en longueur et en largeur suivante : dimension en longueur de l'ordre de 0,5 à 2,5 km ; dimension en largeur de l'ordre de 25 à 1000 m,
- la structure superficielle est formée d'éléments de paroi (105),
- de part et d'autre de l'axe longitudinal (102) de la piste d'atterrissage, les éléments de paroi (105) sont placés chacun dans au moins une rangée parallèle à l'axe longitudinal (102) de la piste d'atterrissage,
- les axes longitudinaux des éléments de paroi (105) sont orientés à la parallèle de l'axe longitudinal de la piste d'atterrissage,
- la hauteur d'élévation (h) des éléments de paroi (105) individuels se situe dans l'ordre de 1 m à 10 m, notamment de 1 m à 5 m, les éléments de paroi (105) individuels présentant un écart (a) mutuel qui se situe dans l'ordre de 1 à 600 m.

2. Agencement selon la revendication 1,
**caractérisé en ce que** la surface (106) de sol est une surface rectangulaire.

3. Agencement selon l'une quelconque des revendications 1 ou 2,
**caractérisé en ce que** les élévations (105) varient au niveau de leur disposition, de leur hauteur (h) d'élévation et/ou de leur écart (a).

4. Agencement selon l'une quelconque des revendications 1 à 3,
**caractérisé en ce que** les hauteurs (h) d'élévation des élévations (105) le long de la direction longitudinale varient sous forme sinusoïdale.

5. Agencement selon la revendication 4,
**caractérisé en ce que** la longueur d'onde des variations sinusoïdales des hauteurs (h) des élévations se situe dans l'ordre de 1 à 600 m, notamment de 300 à 500 m.

6. Agencement selon la revendication 4 ou la revendication 5,
**caractérisé en ce que** la longueur d'onde est de 400 m ± 15 m, la hauteur d'élévation (h) variant jusqu'à une hauteur d'élévation (h) maximale de 5 m.
